# EUROPÄISCHE PATENTSCHRIFT

(11) **EP 1 595 740 B1**
(45) Veröffentlichungstag und Bekanntmachung des Hinweises auf die Patenterteilung: **30.09.2009**
(21) Anmeldenummer: 05009927.4
(22) Anmeldetag: 06.05.2005
(51) Int. Cl.: B60Q 1/12, B60Q 1/00, B60Q 1/06

(54) **Scheinwerfereinheit für ein Fahrzeug und Verfahren zum adaptiven Ausleuchten einer Fahrstrecke**
Headlamp unit for a vehicle and method for adaptively illuminating a lane
Ensemble projecteur pour un véhicule et procédé pour l'éclairage adaptatif d'une voie

(30) Priorität: 10.05.2004 DE 102004022893
(43) Veröffentlichungstag der Anmeldung: 16.11.2005
(73) Patentinhaber: GM Global Technology Operations, Inc., Detroit, MI 48265-3000 (US)
(72) Erfinder: Feid, Thomas, 68239 Mannheim (DE); Gottwald, Wolfgang, 23600 Martos (Jaen) (ES); Kathmann, Jörg, 33154 Salzkotten (DE); Kistinger, Thomas, 64347 Griesheim (DE); Reichmann, Karl-Heiz, 64589 Stockstadt (DE); Schneider, Ingolf, 65428 Rüsselsheim (DE)
(74) Vertreter: Daniel, Ulrich W.P.

(56) Entgegenhaltungen:
- DE-A1- 10 120 217
- DE-A1- 10 209 623
- DE-A1- 10 211 816
- DE-A1- 10 217 194
- DE-A1- 19 914 412
- DE-A1- 19 933 663

## Beschreibung

Die Erfindung betrifft eine Scheinwerfereinheit für ein Fahrzeug und ein Verfahren zum adaptiven Ausleuchten einer Fahrstrecke.

Aus der Europäischen Patentanmeldung EP 0 679 551 A2 ist eine Lichteinheit für Kraftfahrzeuge mit zwei Scheinwerfern und einer zusätzlichen Leuchte bekannt. Die Reflektoren der Scheinwerfer und der Leuchte sind in einem Rahmen angeordnet. Mittels einer Verstelleinrichtung sind die Reflektoren der Scheinwerfer um eine horizontale und eine vertikale Achse verschwenkbar.

Die Deutsche Offenlegungsschrift DE 101 20 217 A1 beschreibt einen Scheinwerfer für Kraftfahrzeuge mit einem Lichtmodul, das zur Erzeugung von Kurvenlicht um eine Achse schwenkbar gelagert ist.

Die Deutsche Offenlegungsschrift DE 198 02 023 A1 beschreibt ein Beleuchtungssystem mit Scheinwerfern für ein Abblendlicht und ein verstellbares Kurvenlicht.

Die DE 102 11 816 A1 offenbart einen Fahrzeugscheinwerfer mit mindestens zwei Lichteinheiten, die mittels einer Verstelleinrichtung um eine horizontale und eine vertikale Schwenkachse verschwenkbar angeordnet sind. Die Verstelleinrichtung umfasst ein Vertikaleinstellelement zur Verstellung eines Vertikallagerpunktes um die horizontale Schwenkachse und ein Horizontaleinstellelement zur Verstellung eines horizontal versetzt zum Vertikallagerpunkt angeordneten Horizontallagerpunktes in die vertikale Schwenkachse.

Der vorliegenden Erfindung liegt nun die Aufgabe zugrunde, eine Scheinwerfereinheit und ein Verfahren zum adaptiven Ausleuchten einer Fahrstrecke bereitzustellen, die beim Umschalten zwischen unterschiedlichen Beleuchtungszuständen abrupte Sichtverluste vermeiden.

Erfindungsgemäß wird diese Aufgabe durch eine Scheinwerfereinheit und ein Verfahren gelöst, wie sie in den unabhängigen Patentansprüchen definiert sind.

Demgemäß ist vorgesehen, dass eine Scheinwerfereinheit für ein Fahrzeug wenigstens zwei relativ zueinander verschwenkbare Lichtmodule aufweist. Wenigstens ein Schwenkmodul nimmt eines der Lichtmodule auf und ist um eine Achse schwenkbar gelagert. Wenigstens ein Tragrahmen ist mit dem Schwenkmodul verbunden.

Beim erfindungsgemäßen Verfahren zum adaptiven Ausleuchten einer Fahrstrecke werden beim gleichzeitigen Betrieb wenigstens zweier Lichtmodule durch Verschwenken wenigstens eines der Lichtmodule wenigstens zwei Beleuchtungszustände eingestellt. Als einstellbare Beleuchtungszustände kommen dynamisches Kurvenlicht, dynamisches Abbiegelicht, Abblendlicht, Fernlicht, Standlicht, Landstraßenlicht, Schlechtwetterlicht wie beispielsweise aus der Offenlegungsschrift DE 101 44 846 A1 bekannt, Schilderberleuchtung, Autobahnlicht und Autobahnlicht für Hochgeschwindigkeit in Frage.

Die vorliegende Erfindung gestattet durch die Nutzung zweier Lichtmodule, die relativ zueinander verschwenkbar sind, eine kontinuierliche Ausleuchtung des Sichtfelds eines Fahrzeugführers auch während des Umschaltens zwischen unterschiedlichen Beleuchtungszuständen.

Vorteilhafte Ausgestaltungen und Weiterbildungen der Erfindung sind Gegenstand der Unteransprüche sowie der Beschreibung unter Bezugnahme auf die Zeichnung.

Die Tragrahmen sind um eine Achse schwenkbar gelagert, die im Wesentlichen senkrecht zur ersten Achse. Die erste Achse verläuft hier ebenfalls sehr vorteilhaft im Wesentlichen vertikal und die zweite Achse im Wesentlichen horizontal. Das Schwenkmodul ist dabei im Tragrahmen schwenkbar gelagert.

Die beiden Lichtmodule sind jeweils in separaten Schwenkmodulen angeordnet. Zusätzlich oder alternativ kann auch vorgesehen sein, dass wenigstens zwei Lichtmodule in zwei separaten Tragrahmen angeordnet sind.

In einer vorteilhaften Ausgestaltung sind die Tragrahmen miteinander gekoppelt.

In einer vorteilhaften Ausgestaltung weisen das Schwenkmodul und/oder der Tragrahmen eine Schwenkkupplung auf. Besonders vorteilhaft ist es in diesem Zusammenhang, wenn die Schwenkkupplung des Schwenkmoduls und/oder des Tragrahmens mit einem Antrieb gekoppelt ist, der von einem Navigationsgerät gesteuert ist.

In einer vorteilhaften Ausgestaltung des erfindungsgemäßen Verfahrens stellt das fahrzeuginnere Lichtmodul wenigstens einen der nachfolgenden Beleuchtungszustände ein: Dynamisches Abbiegelicht, Standlicht, Schlechtwetterlicht, Schilderbeleuchtung.

In einer zusätzlichen oder alternativen, ebenfalls vorteilhaften Ausgestaltung des erfindungsgemäßen Verfahrens stellt das fahrzeugäußere Lichtmodul wenigstens einen der nachfolgenden Beleuchtungszustände ein: Dynamisches Kurvenlicht, Abblendlicht, Fernlicht, Landstraßenlicht, Autobahnlicht, Autobahnlicht für Hochgeschwindigkeit.

Vorteilhafterweise wird durch das erfindungsgemäße Verfahren die Position des Fahrzeugs ermittelt und wenigstens einer der Beleuchtungszustände aufgrund von Daten einer digitalen Straßendatenbank eingestellt.

Die Erfindung wird nachfolgend anhand der in den Figuren der Zeichnung angegebenen Ausführungsbeispiele näher erläutert. Es zeigt dabei:
- Fig. 1: eine perspektivische Ansicht einer Scheinwerfereinheit;
- Figur 2: eine über ein Navigationsgerät gesteuerte Scheinwerfereinheit.

In allen Figuren der Zeichnung sind gleiche bzw. funktionsgleiche Elemente - sofern nichts anderes angegeben ist - mit gleichen Bezugszeichen versehen worden.

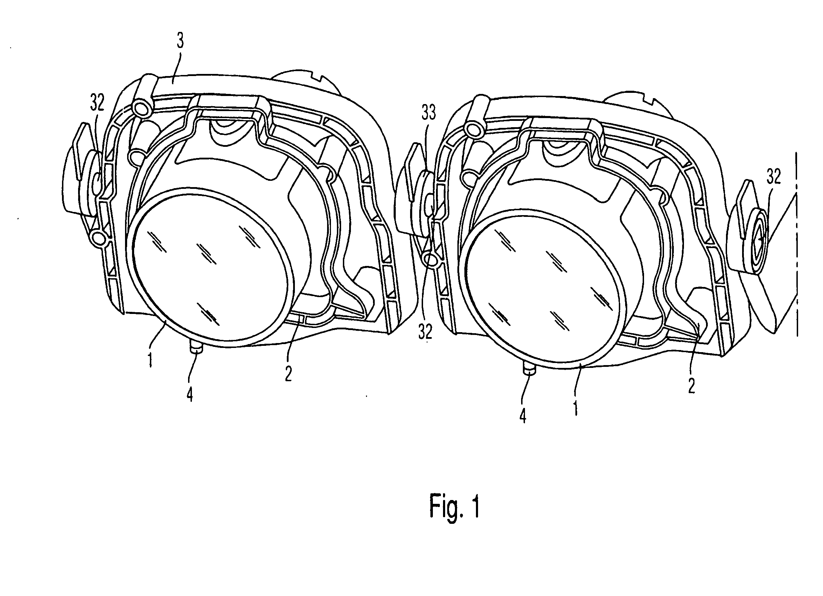

Figur 1 veranschaulicht eine erfindungsgemäße Scheinwerfereinheit mit zwei Lichtmodulen 1. Die Lichtmodule 1 sind Projektionsmodule, die jeweils aus einem Reflektor, einer Linse und einer dazwischenliegenden Blende bestehen.

Die Lichtmodule 1 sind in zwei separaten Schwenkmodulen 2 befestigt. Die Schwenkmodule 2 sind jeweils in einen separaten Tragrahmen 3 eingesetzt. Die Tragrahmen 3 weisen oberhalb und unterhalb der Lichtmodule vorspringende Nasen 31 mit Öffnungen auf, in die von den Schwenkmodulen 2 nach unten abragende Zapfen eingreifen. Durch diese Lagerung wird eine im Wesentlichen vertikale Achse (a) definiert, um die das Schwenkmodul 2 und damit das Lichtmodul 1 gegenüber dem Tragrahmen 3 in einer im Wesentlichen horizontalen Richtung geschwenkt werden kann.

Der untere Zapfen des Schwenkmoduls 2 bildet eine Schwenkkupplung 4 aus, an die ein nicht dargestellter motorischer Antrieb gekoppelt ist. Dieser Antrieb verschwenkt das Schwenkmodul um die horizontale Achse (a).

Die Tragrahmen 3 weisen jeweils beidseitig Vorsprünge 32 auf, die eine im Wesentlichen horizontale Achse (b) definieren, um die die Tragrahmen geschwenkt werden können. Die Achse (b) liegt etwa auf halber Höhe des Lichtmoduls 1, um eine möglichst geringe Bauhöhe zu ermöglichen. Die Schwenkachsen (a) und (b) verlaufen im Wesentlichen senkrecht zueinander. An den voneinander abgewandten Seiten der Tragrahmen 3 bilden die Vorsprünge 32 jeweils Schwenkkupplungen aus, in die jeweils ein Antrieb 5 eingreift. Der Antrieb 5 ist ein von einem Aktuator betätigter Hebel.

An ihren einander zugewandten Seiten sind die Tragrahmen 3 über einen Ring 33 gekoppelt, in den die einander zugewandten Vorsprünge beider Tragrahmen 3 eingreifen. Die Tragrahmen 3 können einzeln und in unterschiedlicher Weise über Antriebe um die Achse (b) geschwenkt werden.

Der Ring 33 kann auf einer beweglichen Schiene angeordnet werden, um eine Höheneinstellung der Tragrahmen 3 und somit der Lichtmodule 1 zu ermöglichen. Bei einer zweiteiligen Ausgestaltung des Rings 33 können beide Lichtmodule getrennt voneinander vertikal eingestellt werden. Die Achse (b) kann dann in ihrer Neigung verändert werden.

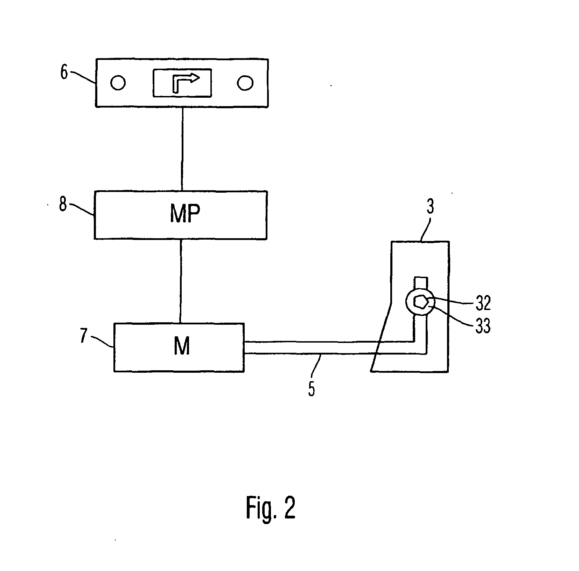

Figur 2 zeigt eine Scheinwerfereinheit, deren Beleuchtungszustände über ein Navigationsgerät 6 gesteuert werden. Der in einer Seitenansicht dargestellte Tragrahmen 3 eines der in Figur 1 dargestellten Lichtmodule ist über den Antrieb 5 mit einem Aktuator 7 verbunden. Als Aktuator eignen sich ein Elektromotor, eine Hydraulik oder eine Pneumatik. Der Aktuator 7 wird von einer an der Scheinwerfereinheit befestigten, mit einem Mikroprozessor ausgerüsteten elektronischen Steuereinheit 8 gesteuert, die wiederum eine Datenverbindung zum Navigationsgerät 6 aufweist.

In analoger Weise steuert die Steuereinheit 8 alle weiteren Antriebe, die mit den Lichtmodulen bzw. deren Tragrahmen und Schwenkrahmen verbunden sind, so dass alle Lichtmodule der Scheinwerfereinheit sowohl vertikal als auch horizontal verschwenkt werden können.

Das Navigationsgerät 6 ermittelt die Position des Fahrzeugs in Bezug auf eine digitale Straßendatenbank. Das Navigationsgerät 6 führt der Steuereinheit 8 Daten zu, die den Typ der gerade befahrenen Straße und den momentanen sowie den unmittelbar folgenden Straßenverlauf betreffen. Damit erhält die Steuereinheit 8 Informationen darüber, ob sich das Fahrzeug nun innerhalb oder außerhalb eines Orts, auf einer Landstraße oder einer Autobahn, auf einer geraden Strecke oder einer kurvigen Strecke, beispielsweise eine Serpentine, befindet. Wird eine Kurve durchfahren, wird der Kurvenradius vom Steuergerät 8 ebenfalls als Parameter zur Einstellung der Lichtmodule verwendet. Ferner können von der eigens dazu ausgelgten Steuereinheit 8 Signale eines Regensensors zur Erkennung von Nässe beziehungsweise Schlechtwetter ausgewertet werden.

Ausgehend von zumindest einigen dieser Daten steuert die Steuereinheit 8 den Aktuator 7 und stellt dadurch unterschiedliche Beleuchtungszustände bzw. Beleuchtungsmodi ein. Dabei wird durch Verstellen des fahrzeuginneren Lichtmoduls dynamisches Abbiegelicht, Standlicht, Schlechtwetterlicht und Schilderbeleuchtung eingestellt. Mit der Ausrichtung des fahrzeugäußeren Lichtmoduls wird dynamisches Kurvenlicht, Abblendlicht, Fernlicht, Landstraßenlicht, Autobahnlicht und Autobahnlicht für Hochgeschwindigkeit eingestellt. Während des Verstellens eines der beiden oder beider Lichtmodule bleiben beide Lichtmodule in Betrieb.

Obgleich die vorliegende Erfindung vorstehend anhand eines bevorzugten Ausführungsbeispiels beschrieben wurde, ist sie nicht darauf beschränkt, sondern auf vielfältige Art und Weise modifizierbar.

So sei die Erfindung nicht auf den in den vorstehenden Figuren dargestellten, speziellen Aufbau und die beschriebene Funktionsweise der Scheinwerfereinheit beschränkt. Vielmehr kann diese auf beliebige Art und Weise modifiziert werden, ohne dass vom grundlegenden Prinzip der Erfindung abgewichen wird. Insbesondere kann die Scheinwerfereinheit mehr als zwei Lichtmodule umfassen.

Ferner kann die Einstellung der Beleuchtungszustände auch durch gleichzeitiges Verschwenken mehrerer Scheinwerfereinheit, also in obigem Beispiel beider Lichtmodule bewerkstelligt werden.

Darüber hinaus können die Tragrahmen einer Scheinwerfereinheit einstückig ausgebildet werden. Dann lassen sich die darin angeordneten Lichtmodule nur gemeinsam um die horizontale Achse schwenken.

Auch sei die Erfindung nicht ausschließlich auf Kraftfahrzeuge beschränkt, wenngleich sie dort und insbesondere bei Personenkraftfahrzeugen besonders vorteilhaft ist. Die Erfindung eignet sich vielmehr bei beliebig ausgestalteten Kraftfahrzeugen.

### Bezugszeichenliste

- 1: Lichtmodul
- 2: Schwenkmodul
- 3: Tragrahmen
- 31: Nase
- 32: Vorsprung
- 33: Ring
- 4: Schwenkkupplung
- 5: Antrieb
- 6: Navigationsgerät
- 7: Aktuator
- 8: Steuereinheit

## Patentansprüche

1. Scheinwerfereinheit für ein Fahrzeug, aufweisend wenigstens zwei Lichtmodule (1) und wenigstens zwei Schwenkmodule (2), die jeweils eines der Lichtmodule (1) aufnehmen
**gekennzeichnet durch**
wenigstens zwei Tragrahmen (3), an denen jeweils eines der Schwenkmodule (2) bezüglich einer ersten Achse schwenkbar gelagert ist, wobei die Tragrahmen (3) jeweils unabhängig voneinander bezüglich einer im Wesentlichen senkrecht zur ersten Achse verlaufenden zweiten Achse gelagert sind.

2. Scheinwerfereinheit nach Anspruch 1, **dadurch gekennzeichnet, dass** die erste Achse im Wesentlichen vertikal verläuft und die zweite Achse im Wesentlichen horizontal verläuft.

3. Scheinwerfereinheit nach Anspruch 1 oder 2, **dadurch gekennzeichnet, dass** die Tragrahmen (3) miteinander gekoppelt sind.

4. Scheinwerfereinheit nach Anspruch 3, **dadurch gekennzeichnet, dass** das Schwenkmodul (2) und/oder der Tragrahmen eine Schwenkkupplung (4) aufweist.

5. Scheinwerfereinheit nach Anspruch 4, **dadurch gekennzeichnet, dass** die Schwenkkupplung des Schwenkmoduls (2) und/oder des Tragrahmens (3) mit einem Antrieb (5) gekoppelt ist, der von einem Navigationsgerät (6) gesteuert ist.

6. Verfahren zum adaptiven Ausleuchten einer Fahrstrecke, bei dem beim gleichzeitigen Betrieb wenigstens zweier Lichtmodule (2) einer Scheinwerfereinheit nach einem der Ansprüche 1 bis 5 durch Verschwenken wenigstens eines der Lichtmodule (2) wenigstens zwei der nachfolgenden Beleuchtungszustände eingestellt werden:
- dynamisches Kurvenlicht,
- dynamisches Abbiegelicht,
- Abblendlicht,
- Fernlicht,
- Standlicht,
- Landstraßenlicht,
- Schlechtwetterlicht,
- Schilderbeleuchtung,
- Autobahnlicht,
- Autobahnlicht für Hochgeschwindigkeit.

7. Verfahren nach dem vorhergehenden Anspruch, **dadurch gekennzeichnet, dass** das fahrzeuginnere Lichtmodul (2) wenigstens einen der nachfolgenden Beleuchtungszustände einstellt:
- Dynamisches Abbiegelicht,
- Standlicht,
- Schlechtwetterlicht,
- Schilderbeleuchtung.

8. Verfahren nach einem der vorhergehenden Verfahrensansprüche, **dadurch gekennzeichnet, dass** das fahrzeugäußere Lichtmodul wenigstens einen der nachfolgenden Beleuchtungszustände einstellt:
- Dynamisches Kurvenlicht,
- Abblendlicht,
- Fernlicht,
- Landstraßenlicht,
- Autobahnlicht,
- Autobahnlicht für Hochgeschwindigkeit.

9. Verfahren nach einem der vorhergehenden Verfahrensansprüche, **dadurch gekennzeichnet, dass** die Position des Fahrzeugs ermittelt wird und wenigstens einer der Beleuchtungszustände aufgrund von Daten einer digitalen Straßendatenbank eingestellt wird.

## Claims

1. A headlamp unit for a vehicle, comprising at least two light modules (1) and at least two pivoting modules (2) which each accommodate one of the light modules (1), **characterized by** at least two support frames (3), to which one each of the pivoting modules (2) is held in a pivoting manner with respect to a first axis, with the support frames (3) each being held independent from one another with respect to a second axis extending substantially perpendicular to the first axis.

2. A headlamp unit according to claim 1, **characterized in that** the first axis extends substantially vertically and the second axis substantially horizontally.

3. A headlamp unit according to claim 1 or 2, **characterized in that** the support frames (3) are coupled with each other.

4. A headlamp unit according to claim 3, **characterized in that** the pivoting module (2) and/or the support frame comprises a pivoting coupling (4).

5. A headlamp unit according to claim 4, **characterized in that** the pivoting coupling of the pivoting module (2) and/or the support frame (3) is coupled with a drive (5) which is controlled by a navigation device (6).

6. A method for adaptively illuminating a lane, in which in the simultaneous operation of at least two light modules (2) of a headlamp unit according to one of the claims 1 to 5 at least two of the following illumination states are set by pivoting at least one of the light modules:
- dynamic curve light;
- dynamic cornering light;
- low beam;
- high beam;
- parking light;
- country light;
- adverse weather light;
- traffic sign lighting;
- motorway light;
- motorway light for high speed.

7. A method according to the preceding claim, **characterized in that** the vehicle-interior light module (2) sets at least one of the following illumination states:
- dynamic corning light;
- parking light;
- adverse weather light;
- traffic sign lighting.

8. A method according to the preceding method claims, **characterized in that** the vehicle-exterior light module sets at least one of the following illumination states:
- dynamic curve light;
- low beam;
- high beam;
- country light;
- motorway light;
- motorway light for high speed.

9. A method according to one of the preceding method claims, **characterized in that** the position of the vehicle is determined and at least one of the illumination states is set on the basis of data of a digital road database.

## Revendications

1. Unité de phare pour un véhicule, présentant au moins deux modules de feux (1) et au moins deux modules pivotants (2) recevant chacun l'un des modules de feux (1), **caractérisée en ce qu'**elle comporte au moins deux cadres portants (3) sur chacun desquels l'un des modules pivotants (2) est supporté de façon pivotante par rapport à un premier axe, les cadres portants (3) étant supportés indépendamment l'un de l'autre par rapport à un deuxième axe sensiblement perpendiculaire au premier axe.

2. Unité de phare selon la revendication 1, **caractérisée en ce que** le premier axe est sensiblement vertical et le deuxième axe est sensiblement horizontal.

3. Unité de phare selon la revendication 1 ou 2, **caractérisée en ce que** les cadres portants (3) sont couplés entre eux.

4. Unité de phare selon la revendication 3, **caractérisée en ce que** le module pivotant (2) et/ou le cadre portant présentent un couplage pivotant (4).

5. Unité de phare selon la revendication 4, **caractérisée en ce que** le couplage pivotant du module pivotant (2) et/ou du cadre portant (3) est couplé à un entraînement (5) qui est commandé par un appareil de navigation (6).

6. Procédé pour l'éclairage adaptatif d'une voie de circulation dans lequel, en faisant fonctionner simultanément au moins deux modules d'éclairage (2) d'une unité de phare selon l'une des revendications 1 à 5, au moins deux des états d'éclairage suivants peuvent être obtenus par le pivotement d'au moins un des modules d'éclairage (2) :
- éclairage dynamique en virage,
- éclairage dynamique en manoeuvre,
- feux de croisement,
- feux longue portée,
- feux de position,
- feux de route,
- feux de mauvais temps,
- éclairage des panneaux,
- feux d'autoroute,
- feux d'autoroute à grande vitesse.

7. Procédé selon la revendication précédente, **caractérisé en ce que** le module d'éclairage (2) situé vers l'intérieur du véhicule adopte au moins un des états d'éclairage suivants :
- éclairage dynamique en virage,
- feux de position,
- feux de mauvais temps,
- éclairage des panneaux.

8. Procédé selon l'une des revendications de procédé précédentes, **caractérisé en ce que** le module d'éclairage situé vers l'extérieur du véhicule adopte au moins un des états d'éclairage suivants :
- éclairage dynamique en virage,
- feux de croisement,
- feux longue portée,
- feux de route,
- feux d'autoroute,
- feux d'autoroute à grande vitesse.

9. Procédé selon l'une des revendications de procédé précédentes, **caractérisé en ce que** la position du véhicule est déterminée et au moins un des états d'éclairage est établi en fonction des données d'une base de données routières numérique.
